# EUROPEAN PATENT APPLICATION

(11) **EP 4 098 403 A1**
(43) Date of publication of application: **07.12.2022**
(21) Application number: 21216243.2
(22) Date of filing: 21.12.2021
(51) Int. Cl.: B25F 5/00, A01G 20/47

(54) **ELECTRIC TOOL AND METHOD FOR OPERATING SAME**

(30) Priority: 01.06.2021 CN 202121207126 U
(71) Applicant: Techtronic Cordless GP, Anderson, SC 29621 (US)
(72) Inventor: DU, Jie Xiong, Dongguan City (CN); CHEN, Yong Gang, Dongguan City (CN)
(74) Representative: Grünecker Patent- und Rechtsanwälte PartG mbB

(57) **Abstract**

Disclosed in the present utility model are an electric tool and a method for operating same. The electric tool comprises a power supply input, a motive power system, a control system and at least one control button, the motive power system comprising a motor and an operating component driven by the motor, the control system comprising a circuit module to which the at least one control button is electrically connected, wherein the control system is configured to selectively supply electric power to the circuit module or cut off electric power to the circuit module, and adjust an output power of the motive power system, based on the number of times that the at least one control button is operated. The method for operating the electric tool comprises: operating the at least one control button; the control system judging whether to supply electric power to the circuit module or cut off electric power to the circuit module, or adjust an output power of the motive power system, based on the number of times that the at least one control button is operated; and the control system supplying electric power to the circuit module or cutting off electric power to the circuit module, and adjusting the output power of the motive power system, based on the judgement result.

## Description

### Technical Field

The present utility model relates to the field of electric tools, in particular to an electric tool and a method for operating same.

### Background Art

Most conventional electric tools, especially electric tools used for gardening, use a mechanical control button. For example, a mechanical switch with a self-locking function is coupled by series connection into a control circuit of the electric tool via a micro switch. When an electric tool requires more operational variation, the number of control buttons generally needs to be increased. This not only takes up space on a user interaction panel but also makes operation inconvenient for the user.

### Summary of the Utility Model

In view of the above, an objective of the present utility model is to provide an electric tool and a method for operating same, in which a small number of control buttons can be used to perform a greater number of operations, and current leakage can be prevented in a switched-off state.

Those skilled in the art will derive other objectives of the present utility model from the following description. Therefore, the preceding statement of objects is not exhaustive, and is only intended to explain some of the many objectives of the present utility model.

Thus, one aspect of the present utility model is an electric tool, comprising a power supply input, a motive power system, a control system and at least one control button, the motive power system comprising a motor and an operating component driven by the motor, the control system comprising a circuit module to which the at least one control button is electrically connected, wherein the control system is configured to selectively supply electric power to the circuit module or cut off electric power to the circuit module, and adjust an output power of the motive power system, based on the number of times that the at least one control button is operated.

In some embodiments, the electric tool further comprises a display module, which displays an output power level of the motive power system and/or an on/off state of the electric tool.

In some embodiments, the at least one control button comprises a first control button, and the control system is configured to selectively supply electric power to the circuit module, and increase the output power of the motive power system in steps, based on the number of times that the first control button is operated.

In some embodiments, the control system is configured such that: in a switched-off state of the electric tool, the control system supplies electric power to the circuit module based on operation of the first control button; and when the output power level of the motive power system is not at its maximum, the control system increases the output power of the motive power system by one step based on operation of the first control button.

In some embodiments, the at least one control button comprises a second control button, and the control system is configured to selectively cut off electric power to the circuit module, and reduce the output power of the motive power system in steps, based on the number of times that the second control button is operated.

In some embodiments, the control system is configured such that: when the output power level of the motive power system is at its minimum, the control system cuts off electric power to the circuit module based on operation of the second control button; when the output power level of the motive power system is not at its minimum, the control system reduces the output power of the motive power system by one step based on operation of the second control button.

In some embodiments, the at least one control button comprises a first control button and a second control button, and the control system is configured to selectively supply electric power to the circuit module or cut off electric power to the circuit module based on the number of times that the first control button is operated, and adjust the output power of the motive power system in steps based on the number of times that the second control button is operated.

In some embodiments, the control system is further configured to selectively control the electric tool based on the duration of operation and/or a specific sequence of operations of the at least one control button.

In some embodiments, the at least one control button is coupled to an AD module in the circuit module, and the control system judges the number of times that the at least one control button is operated according to the AD module.

In some embodiments, the circuit module further comprises a counter for recording the number of times that the at least one control button is operated.

In some embodiments, the circuit module comprises an interaction unit, a voltage conversion unit and a main control unit, wherein the voltage conversion unit supplies a suitable voltage to the main control unit and the motor, and the interaction unit comprises a first switching element coupled between the power supply input and the voltage conversion unit, and a second switching element coupled to a control end of the first switching element; wherein the switching of the first switching element on and off is controlled by means of the second switching element and/or the at least one control button coupled to at least one input line of the main control unit, and the switching of the second switching element on and off is controlled by means of at least one output line of the main control unit.

In some embodiments, the main control unit outputs a first output signal to the at least one output line based on a first input signal of the at least one input line, to lock the second switching element in the ON state, so that the first switching element remains switched on.

In some embodiments, the main control unit outputs a second output signal to the at least one output line based on a second input signal of the at least one input line, to lock the second switching element in the OFF state, so that the first switching element is switched off.

Thus, another aspect of the present utility model is a method for operating an electric tool, the electric tool comprising a power supply input, a motive power system, a control system and at least one control button, the motive power system comprising a motor and an operating component driven by the motor, the control system comprising a circuit module to which the at least one control button is electrically connected, wherein the method comprises: operating the at least one control button; the control system judging whether to supply electric power to the circuit module or cut off electric power to the circuit module, or adjust an output power of the motive power system, based on the number of times that the at least one control button is operated; and the control system supplying electric power to the circuit module or cutting off electric power to the circuit module, and adjusting the output power of the motive power system, based on the judgement result.

In some embodiments, the method further comprises displaying an output power level of the motive power system and/or an on/off state of the electric tool.

In some embodiments, the at least one control button comprises a first control button, and the method further comprises the control system selectively supplying electric power to the circuit module, and increasing the output power of the motive power system in steps, based on the number of times that the first control button is operated. In some embodiments, the method further comprises: in a switched-off state of the electric tool, the control system supplying electric power to the circuit module based on operation of the first control button; and when the output power level of the motive power system is not at its maximum, the control system increasing the output power of the motive power system by one step based on operation of the first control button.

In some embodiments, the at least one control button comprises a second control button, and the method further comprises the control system selectively cutting off electric power to the circuit module, and reducing the output power of the motive power system in steps, based on the number of times that the second control button is operated.

In some embodiments, the method further comprises: when the output power level of the motive power system is at its minimum, the control system cutting off electric power to the circuit module based on operation of the second control button; and when the output power level of the motive power system is not at its minimum, the control system reducing the output power of the motive power system by one step based on operation of the second control button.

In some embodiments, the at least one control button comprises a first control button and a second control button, and the method further comprises: the control system selectively supplying electric power to the circuit module or cutting off electric power to the circuit module based on the number of times that the first control button is operated, and adjusting the output power of the motive power system in steps based on the number of times that the second control button is operated.

In some embodiments, the method further comprises the control system selectively controlling the electric tool based on the duration of operation and/or a specific sequence of operations of the at least one control button.

In some embodiments, the method further comprises the control system judging the number of times that the at least one control button is operated according to an AD module coupled to the at least one control button.

In some embodiments, the method further comprises recording the number of times that the at least one control button is operated by means of a counter in the circuit module.

In some embodiments, the circuit module comprises an interaction unit, a voltage conversion unit and a main control unit, wherein the voltage conversion unit supplies a suitable voltage to the main control unit and the motor, and the interaction unit comprises a first switching element coupled between the power supply input and the voltage conversion unit, and a second switching element coupled to a control end of the first switching element, and the method further comprises: controlling the switching of the first switching element on and off by means of the second switching element and/or the at least one control button coupled to at least one input line of the main control unit, and controlling the switching of the second switching element on and off by means of at least one output line of the main control unit.

In some embodiments, when the electric tool is switched off, the method further comprises: operating the at least one control button, such that the first switching element is switched on and electric power is supplied to the voltage conversion unit, so that the main control unit is supplied with power; the main control unit judging whether the electric tool is switched on normally based on a first input signal from the at least one input line; upon judging that the electric tool is switched on normally, the main control unit outputting a first output signal to the at least one output line, to lock the second switching element in the ON state, so that the first switching element remains switched on; otherwise, the main control unit outputting a second output signal to the at least one output line, to lock the second switching element in the OFF state, so that the first switching element is switched off.

In some embodiments, when the output power level of the motive power system is at its minimum, the method further comprises: operating the at least one control button; the main control unit judging whether to switch off the electric tool or increase the output power of the motive power system based on a second input signal from the at least one input line; upon judging that the electric tool is to be switched off, the main control unit outputting a second output signal to the at least one output line, to lock the second switching element in the OFF state, so that the first switching element is switched off; otherwise, the main control unit increasing the output power of the motive power system.

### Brief Description of the Drawings

The above-described and additional characteristics of the present utility model will become apparent from the following description of preferred embodiments provided only as examples and in conjunction with the drawings. Among the drawings,
Figure 1 shows a schematic drawing of a leaf blower according to an embodiment of the present utility model.
Figure 2 shows a schematic drawing of an interaction panel according to an embodiment of the present utility model.
Figure 3 shows a schematic diagram of the interaction unit according to an embodiment of the present utility model.
Figure 4 shows a schematic diagram of the interaction unit according to an embodiment of the present utility model.
Figure 5 shows a flow chart of the method for operating an electric tool according to an embodiment of the present utility model.
Figure 6 shows a flow chart of the method for operating an electric tool in conjunction with the embodiment shown in Fig. 4.

### Detailed Description of Embodiments

In the subsequent claims and the foregoing description of the present utility model, unless otherwise required by the context for language of expression or necessary implications, the term "comprises" or, for example, a variant (for example, "includes" or "contains") is used in an inclusive manner, i.e., to indicate the existence of the feature, without excluding the presence or addition of other features in the various embodiments of the present utility model.

For example, "horizontal", "vertical", "transverse", "longitudinal", "above", "below" and similar terms used herein are for the purpose of describing the present utility model in the orientation of the utility model in normal use, and are not intended to limit the present utility model to any specific orientation. As used herein, "coupling" includes connection in a wired or wireless manner, and also includes direct or indirect (for example, with another circuit element in between) connection.

It should be understood that if any publication of prior art is cited herein, such a reference does not constitute an admission that the publication forms part of common knowledge in the art in any country.

A leaf blower is described below as an example in conjunction with the drawings and embodiments, but those skilled in the art will understand that the electric tool referred to in the present utility model is not limited to a leaf blower.

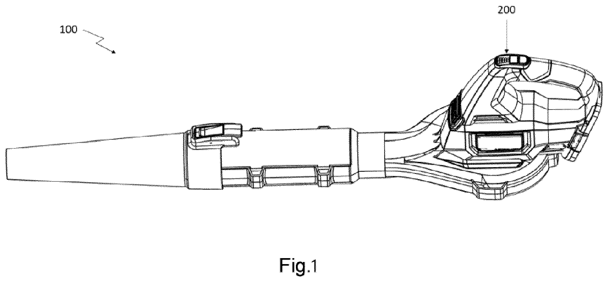

Figure 1 shows a schematic drawing of a leaf blower 100 according to an embodiment of the present utility model. The leaf blower 100 comprises a power supply input, a motive power system, a control system and at least one control button. The power supply input may be a rechargeable battery or an AC power supply, etc. The motive power system comprises a motor and an operating component driven by the motor. In the example shown in Fig. 1, the operating component is an impeller of the blower. In some embodiments, the operating component can be a lawn mower blade, a hedge trimmer blade, a strimmer head, a chainsaw chain, rotary teeth of a cultivator, etc. The motive power system may also comprise a transmission component, etc. The control system comprises a circuit module electrically connected between the motive power system, the power supply input and a user interaction panel. At least one control button electrically connected to the circuit module is provided on the interaction panel, for example one, two, three or more control buttons. The circuit module may comprise an interaction unit, a voltage conversion unit and a main control unit. The interaction unit receives a user input; in some embodiments, the interaction unit also provides electric tool state information feedback to the user, visually or audibly or in another manner. The voltage conversion unit supplies a suitable voltage to the main control unit and the motor. The core component of the main control unit may be an MCU, and the main control unit may also comprise supporting circuitry and elements at the periphery of the MCU. As will be described in detail below, the control system is configured to selectively supply electric power to the circuit module or cut off electric power to the circuit module, adjust the output power of the motive power system, and/or perform another control function, based on operation of at least one control button. In some embodiments, adjustment of the output power of the motive power system can also alternatively be adjustment of the output rotation speed, output torque, etc. of the motor in the motive power system.

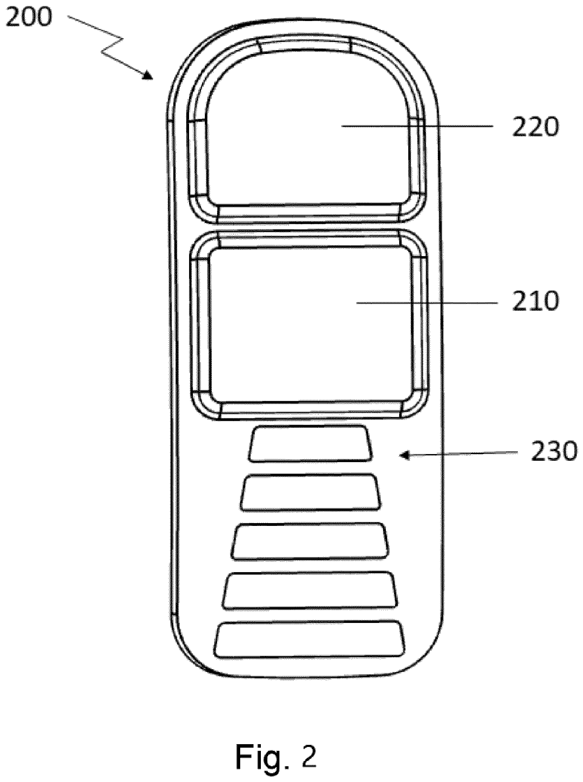

Figure 2 shows a schematic drawing of an interaction panel 200 according to an embodiment of the present utility model. The interaction panel 200 comprises a first control button 210, a second control button 220 and a display module 230. In some embodiments, the control system can be configured to selectively supply electric power to the circuit module, adjust the output power of the motive power system in steps, and cut off the supply of electric power to the circuit module, based on the number of times that the first control button 210 is operated. In some embodiments, the control system can be configured to selectively supply electric power to the circuit module and increase the output power of the motive power system in steps based on the number of times that the first control button 210 is operated; and selectively reduce the output power of the motive power system in steps and cut off electric power to the circuit module based on the number of times that the second control button 220 is operated. Specifically, in the switched-off state of the electric tool, the control system supplies electric power to the circuit module based on operation of the first control button 210. When the motive power system has output power but the level thereof is not at its maximum, the control system increases the output power of the motive power system by one step based on each operation of the first control button 210. When the motive power system has an output power level and this is at its minimum, the control system cuts off electric power to the circuit module based on operation of the second control button 220. When the motive power system has output power but the level thereof is not at its minimum, the control system reduces the output power of the motive power system by one step based on each operation of the second control button 220. The first control button 210 and second control button 220 can be operated alternately according to user needs.

In some embodiments, the control system is configured to selectively supply electric power to the circuit module or cut off electric power to the circuit module based on the number of times that the first control button 210 is operated, and adjust the output power of the motive power system in steps based on the number of times that the second control button 220 is operated. For example, in the switched-off state of the electric tool, the control system supplies electric power to the circuit module based on operation of the first control button 210. At this time, the output power level of the motive power system is at its minimum, or is the power output level which the motive power system had before the electric tool was last switched off. Subsequently, the control system adjusts the output power of the motive power system in steps based on the number of times that the second control button 220 is operated. Optionally, the output power level of the motive power system can increase in steps with each operation of the second control button 220, and when it reaches its maximum, the control system reduces the output power of the motive power system in steps based on each operation of the second control button 220 until the minimum level is reached. Alternatively, when the output power level of the motive power system reaches its maximum, operating the second control button 220 again causes the output power level of the motive power system to return to the minimum level. In this way, a cycle is formed. In the switched-on state of the electric tool, the control system can cut off electric power to the circuit module based on operation of the first control button 210. In some embodiments, the control system performs different control functions when the control button is operated, depending on the state of the electric tool. For example, when the electric tool is switched off, operating the control button will cause the control system to supply electric power to the circuit module; when the motive power system is at an intermediate output power level, operating the control button will cause the control system to increase, reduce or cyclically switch the output power of the motive power system; when the output power level of the motive power system reaches its minimum or maximum, operating the control button will cause the control system to cut off electric power to the circuit module.

In some embodiments, the control system is configured to perform different control functions based on the manner in which at least one control button is operated. In some embodiments, the control system selectively controls the electric tool based on the duration of operation of at least one control button. For example, the control system supplies electric power to the circuit module or cuts off electric power to the circuit module, based on long-press operation of the control button. As another example, the control system adjusts the output power of the motive power system in steps and/or cyclically, based on short-press operation of the control button.

In some embodiments, the control system may also be configured to selectively control the electric tool based on a specific sequence of operations of at least one control button. For example, the control system supplies electric power to the circuit module or cuts off electric power to the circuit module, based on two or more consecutive operations of the control button. The control system adjusts the output power of the motive power system in steps and/or cyclically, based on a single operation of the control button. As another example, the control system can control the electric tool based on simultaneous operation of two or more control buttons.

The multiple ways listed above in which the control system is linked to the operation buttons are not mutually exclusive. Based on the teaching provided by the present invention, those skilled in the art can select one or more of multiple control methods for combination. The control button may take the form of a push-key switch, but may also take other forms, including but not limited to a touch switch, toggle switch, etc. Those skilled in the art will understand that the above embodiments are not restrictive. The display module 230 displays the output power level of the motive power system and/or the on/off state of the electric tool. The display module 230 in Fig. 2 comprises five LED lamps, meaning that the output power level of the motive power system is adjustable in five steps. In the switched-off state of the electric tool, all five LED lamps are not lit. When the electric tool is switched on, the shortest LED lamp lights up, at which time the output power level of the motive power system is at its minimum. Each time the output power of the motive power system increases by one step, another adjacent LED lamp is lit. When the output power level of the motive power system is at its maximum, all five LED lamps are lit. In some embodiments, it is also possible for different output power levels of the motive power system to correspond to only one LED lamp; this LED lamp can change colour with different power levels. In some embodiments, the output power level of the motive power system can have less than five steps or more than five steps. In some embodiments, information about the output power level of the motive power system can be provided to the user by means of an LED digital display; or the user can be notified audibly that the output power of the motive power system has been adjusted; or the on/off state of the electric tool and/or the output power level of the motive power system, or even more information, can be provided to the user in any other manner foreseeable to those skilled in the art.

At least one control button can be coupled to an AD module in the circuit module, and the control system judges the number of times that the at least one control button is operated according to the AD module. The AD module can be provided by the MCU. For example, the control button can be realized in the form of a digital potentiometer. The number of times that the control button is operated will change the switched-in resistance value; the AD module converts the switched-in resistance value to digital form, and the MCU judges the number of operations according to the digital range obtained. In some embodiments, a comparator can also be used to judge the number of operations. The circuit module may also comprise a counter for recording the number of times that at least one control button is operated. The counter can be realized in a program of the MCU.

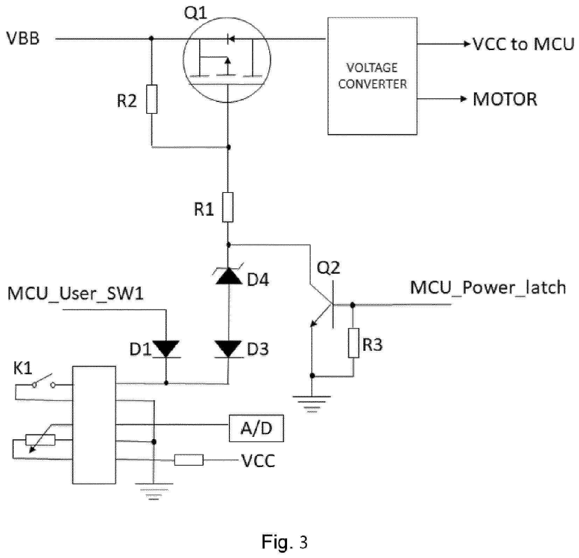

Figure 3 shows a schematic diagram of the interaction unit according to an embodiment of the present utility model. The interaction unit comprises a first switching element (Q1) coupled between the power supply input and the voltage conversion unit, and a second switching element (Q2) coupled to a control end of the first switching element. The switching of the first switching element on and off is controlled by means of the second switching element and/or at least one control button (K1) coupled to at least one input line (MCU_User_SW1) of the MCU, and the switching of the second switching element on and off is controlled by means of at least one output line (MCU_Power_latch) of the MCU. Based on a first input signal of the at least one input line, the MCU outputs a first output signal to the at least one output line, to lock the second switching element in the ON state, so that the first switching element remains switched on. Based on a second input signal of at least one input line, the MCU outputs a second output signal to at least one output line, to lock the second switching element in the OFF state, so that the first switching element is switched off. For example, Q1 may be a P-channel MOSFET, while Q2 may be an NPN transistor. Q1 has an input end coupled to the power supply input VBB, and an output end coupled to an input end of the voltage conversion unit. A resistor R2 is coupled between the input end and control end of Q1. An output end of Q2 is coupled to ground. A resistor R3 is coupled between a control end and the output end of Q2. The control end of Q2 is coupled to MCU_Power_latch. When MCU_Power_latch outputs a HIGH level, Q2 switches on, and otherwise switches off. The control end of Q1 is coupled to an input end of Q2 via a resistor R1, so when Q2 is switched on, the control end of Q1 obtains a lower level, switching Q1 on. The control end of Q1 is further coupled to ground via the resistor R1, a Zener diode D4 (reverse-biased), a diode D3 (forward-biased) and K1. When K1 is closed, a closed circuit is formed between VBB, R2, R1, D4, D3, K1 and ground, and the control end of Q1 obtains a lower level, switching Q1 on. When K1 is opened and Q2 is switched off, Q1 is switched off. MCU_User_SW1 is coupled to ground via D1 (forward-biased) and K1; when K1 is closed, MCU_User_SW1 exhibits a LOW level, and the MCU judges the closed/open state of K1 by detecting MCU_User_SW1.

The operational process of the electric tool being switched on and off is described in detail below in accordance with Fig. 3. When the electric tool is switched off, the user operates K1, and Q1 switches on. The voltage conversion module obtains a voltage, and supplies a suitable voltage to the MCU and the motor; the MCU is able to complete power-up initialization within a very short time. The MCU subsequently detects an input signal from MCU_User_SW1. If the input signal is HIGH, the MCU judges that an erroneous operation or disturbance has occurred, and will output a LOW level to MCU_Power_latch, to lock Q2 in the OFF state; when the user's finger leaves K1, Q1 switches off and the electric tool is switched off. If the input signal is LOW, the MCU outputs a HIGH level to MCU_Power_latch, to lock Q2 in the ON state, so that Q1 stays on. At this time, even if the user's finger leaves K1, the electric tool will remain in the switched-on state. Such on/off switching in a self-locking fashion is achieved by means of the circuit module, rather than mechanically. When the output power level of the electric tool reaches its minimum, the user operates K1, and the MCU detects an input signal from MCU_User_SW1 as a LOW level, and will output a LOW level to MCU_Power_latch, to lock Q2 in the OFF state; when the user's finger leaves K1, Q1 switches off and the electric tool is switched off. If Q1 is switched off and the user does not perform any operation, the electric tool is in the switched-off state, at which time electrical leakage can be prevented because no pathway is formed between VBB and the circuit module.

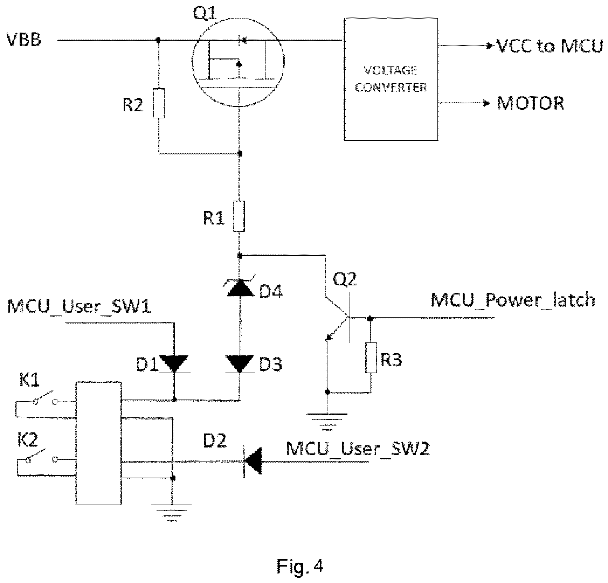

Figure 4 shows a schematic diagram of the interaction unit according to another embodiment of the present utility model. Unlike Fig. 3, no digital potentiometer or AD module is used in Fig. 4; instead, coupling to two input lines MCU_User_SW1 and MCU_User_SW2 of the MCU is achieved via two control buttons K1 and K2 respectively. K1 is equivalent to a "+" button; when the electric tool is switched off, the electric tool can be switched on by operating K1 for the first time. For example, the counter in the MCU program can be set to 1, indicating that the output power of the motive power system is at its minimum. Thereafter, the counter can be incremented by 1 each time that K1 is operated, the value of the counter corresponding to the output power level of the motive power system, until the output power level of the motive power system reaches its maximum (counter = MAX). K2 is equivalent to a "-" button.

When the output power level of the motive power system is not at its minimum, the counter can be decremented by 1 each time that K2 is operated, the value of the counter corresponding to the output power level of the motive power system, until the output power level of the motive power system reaches its minimum (counter = 1); when the output power level of the motive power system is at its minimum, operating K2 again will cut off electric power to the circuit module.

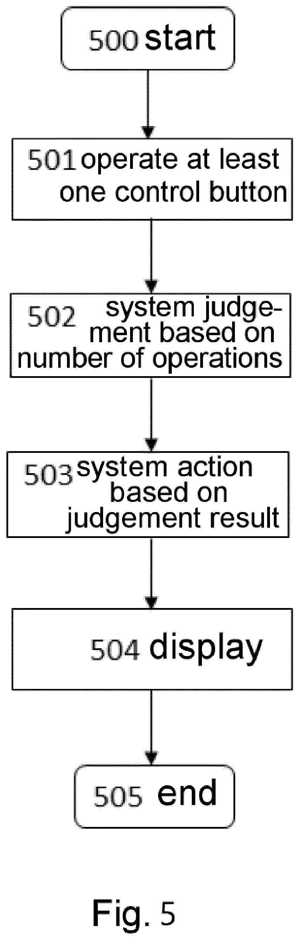

Figure 5 shows a flow chart of the method for operating an electric tool according to an embodiment of the present utility model. In step 500, the method starts. In step 501, at least one control button is operated. In step 502, a control system judges whether to supply electric power to a circuit module or cut off electric power to the circuit module, or adjust the output power of a motive power system, based on the number of times that the at least one control button is operated. In step 503, the control system supplies electric power to the circuit module or cuts off electric power to the circuit module, and adjusts the output power of the motive power system, based on the judgement result. In step 504, the output power level of the motive power system and/or the on/off state of the electric tool is/are displayed. In step 505, the method ends.

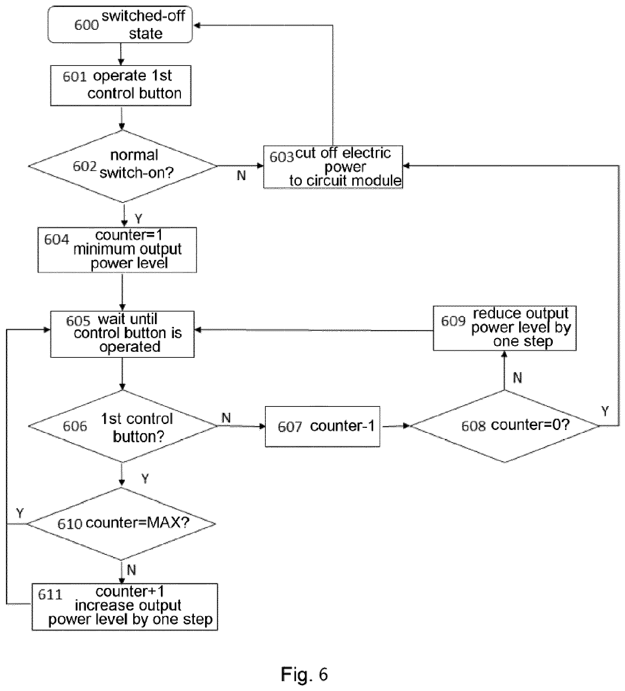

Figure 6 shows a flow chart of the method for operating an electric tool in conjunction with the embodiment shown in Fig. 4. The method starts with the electric tool being in the switched-off state in step 600. In step 601, K1 is operated. In step 602, the control system judges whether this is normal switch-on or an erroneous operation. In the case of an erroneous operation or disturbance, the method moves to step 603, in which the control system cuts off electric power to the circuit module, switching off the electric tool. In the case of normal switch-on, the method moves to step 604, in which the counter is set to 1 and the output power level of the motive power system is adjusted to its minimum. In step 605, the control system waits until any control button is operated. In step 606, the control system judges whether K1 or K2 is operated. If K2 is operated, the method moves to step 607, in which the counter is decremented by 1, and the method then moves to step 608. In step 608, a judgement is made as to whether the counter is 0. If it is 0, the method returns to step 603, in which electric power to the circuit module is cut off, switching off the electric tool. If it is not 0, the method moves to step 609, in which the output power level of the motive power system is reduced by one step, and the method then returns to step 605, to continue to wait for the next operation. If it is judged in step 606 that K1 is operated, the method moves to step 610. In step 610, a judgement is made as to whether the counter has reached MAX (in the example shown in Fig. 2, MAX is 5, i.e. the output power level has reached its maximum). If the counter has already reached MAX, the method returns to step 605, to contine to wait for the next operation. If the counter has not yet reached MAX, the method moves to step 611, in which the counter is incremented by 1 and the output power level of the motive power system is increased by one step, and the method then returns to step 605, to continue to wait for the next operation.

While the present utility model has been illustrated and described in detail above in conjunction with the drawings, the description should be regarded as illustrative rather than restrictive; it should be understood that only exemplary embodiments are shown and described, and that they do not limit the present utility model in any way. It is understandable that any characteristic described herein may be used in any embodiment. The illustrative embodiments do not exclude each other or exclude other embodiments not listed herein. Therefore, the present utility model further provides a combination of one or more of the above-described exemplary embodiments. The present utility model can be amended and altered without deviating from the spirit and scope of the present utility model.

## Claims

1. Electric tool, comprising a power supply input, a motive power system, a control system and at least one control button,
the motive power system comprising a motor and an operating component driven by the motor,
the control system comprising a circuit module to which the at least one control button is electrically connected,
**characterized in that**
the control system is configured to selectively supply electric power to the circuit module or cut off electric power to the circuit module, and adjust an output power of the motive power system, based on the number of times that the at least one control button is operated,
wherein the electric tool preferably further comprises a display module, which displays an output power level of the motive power system and/or an on/off state of the electric tool.

2. Electric tool according to Claim 1, **characterized in that** the at least one control button comprises a first control button, and the control system is configured to selectively supply electric power to the circuit module, and increase the output power of the motive power system in steps, based on the number of times that the first control button is operated,
wherein the control system is configured such that:
in a switched-off state of the electric tool, the control system supplies electric power to the circuit module based on operation of the first control button,
when the output power level of the motive power system is not at its maximum, the control system increases the output power of the motive power system by one step based on operation of the first control button.

3. Electric tool according to Claim 1, **characterized in that** the at least one control button comprises a second control button, and the control system is configured to selectively cut off electric power to the circuit module, and reduce the output power of the motive power system in steps, based on the number of times that the second control button is operated,
wherein the control system is configured such that:
when the output power level of the motive power system is at its minimum, the control system cuts off electric power to the circuit module based on operation of the second control button;
when the output power level of the motive power system is not at its minimum, the control system reduces the output power of the motive power system by one step based on operation of the second control button.

4. Electric tool according to Claim 1, **characterized in that** the at least one control button comprises a first control button and a second control button, and the control system is configured to:
selectively supply electric power to the circuit module or cut off electric power to the circuit module based on the number of times that the first control button is operated, and adjust the output power of the motive power system in steps based on the number of times that the second control button is operated, and/or
selectively control the electric tool based on the duration of operation and/or a specific sequence of operations of the at least one control button.

5. Electric tool according to Claim 1, **characterized in that** the at least one control button is coupled to an AD module in the circuit module, and the control system is configured to:
judge the number of times that the at least one control button is operated according to the AD module, and/or
record the number of times that the at least one control button is operated by means of a counter in the circuit module.

6. Electric tool according to Claim 1, **characterized in that** the circuit module comprises an interaction unit, a voltage conversion unit and a main control unit, wherein the voltage conversion unit supplies a suitable voltage to the main control unit and the motor, and the interaction unit comprises a first switching element coupled between the power supply input and the voltage conversion unit, and a second switching element coupled to a control end of the first switching element;
wherein the switching of the first switching element on and off is controlled by means of the second switching element and/or the at least one control button coupled to at least one input line of the main control unit, and the switching of the second switching element on and off is controlled by means of at least one output line of the main control unit.

7. Electric tool according to Claim 6, **characterized in that** the main control unit outputs a first output signal to the at least one output line based on a first input signal of the at least one input line, to lock the second switching element in the ON state, so that the first switching element remains switched on.

8. Electric tool according to Claim 6, **characterized in that** the main control unit outputs a second output signal to the at least one output line based on a second input signal of the at least one input line, to lock the second switching element in the OFF state, so that the first switching element is switched off.

9. Method for operating an electric tool, the electric tool comprising a power supply input, a motive power system, a control system and at least one control button, the motive power system comprising a motor and an operating component driven by the motor, the control system comprising a circuit module to which the at least one control button is electrically connected, **characterized in that** the method comprises:
operating the at least one control button;
the control system judging whether to supply electric power to the circuit module or cut off electric power to the circuit module, or adjust an output power of the motive power system, based on the number of times that the at least one control button is operated;
the control system supplying electric power to the circuit module or cutting off electric power to the circuit module, and adjusting the output power of the motive power system, based on the judgement result,
wherein the method preferably further comprises displaying an output power level of the motive power system and/or an on/off state of the electric tool.

10. Method for operating an electric tool according to Claim 9, **characterized in that** the at least one control button comprises a first control button, and the method further comprises the control system selectively supplying electric power to the circuit module, and increasing the output power of the motive power system in steps, based on the number of times that the first control button is operated,
wherein the method further comprises:
in a switched-off state of the electric tool, the control system supplying electric power to the circuit module based on operation of the first control button;
when the output power level of the motive power system is not at its maximum, the control system increasing the output power of the motive power system by one step based on operation of the first control button.

11. Method for operating an electric tool according to Claim 9, **characterized in that** the at least one control button comprises a second control button, and the method further comprises the control system selectively cutting off electric power to the circuit module, and reducing the output power of the motive power system in steps, based on the number of times that the second control button is operated,
wherein the method further comprises:
when the output power level of the motive power system is at its minimum, the control system cutting off electric power to the circuit module based on operation of the second control button;
when the output power level of the motive power system is not at its minimum, the control system reducing the output power of the motive power system by one step based on operation of the second control button.

12. Method for operating an electric tool according to Claim 9, **characterized in that** the at least one control button comprises a first control button and a second control button, and the method further comprises:
the control system selectively supplying electric power to the circuit module or cutting off electric power to the circuit module based on the number of times that the first control button is operated, and adjusting the output power of the motive power system in steps based on the number of times that the second control button is operated, and/or
the control system selectively controlling the electric tool based on the duration of operation and/or a specific sequence of operations of the at least one control button.

13. Method for operating an electric tool according to Claim 9, **characterized in that** the method further comprises:
the control system judging the number of times that the at least one control button is operated according to an AD module coupled to the at least one control button, and/or
the control system recording the number of times that the at least one control button is operated by means of a counter in the circuit module.

14. Method for operating an electric tool according to Claim 9, **characterized in that** the circuit module comprises an interaction unit, a voltage conversion unit and a main control unit, wherein the voltage conversion unit supplies a suitable voltage to the main control unit and the motor, and the interaction unit comprises a first switching element coupled between the power supply input and the voltage conversion unit, and a second switching element coupled to a control end of the first switching element, and the method further comprises: controlling the switching of the first switching element on and off by means of the second switching element and/or the at least one control button coupled to at least one input line of the main control unit, and controlling the switching of the second switching element on and off by means of at least one output line of the main control unit.

15. Method for operating an electric tool according to Claim 14, **characterized in that** when the electric tool is switched off, the method further comprises:
operating the at least one control button, such that the first switching element is switched on and electric power is supplied to the voltage conversion unit, so that the main control unit is supplied with power;
the main control unit judging whether the electric tool is switched on normally based on a first input signal from the at least one input line;
upon judging that the electric tool is switched on normally, the main control unit outputting a first output signal to the at least one output line, to lock the second switching element in the ON state, so that the first switching element remains switched on; otherwise, the main control unit outputting a second output signal to the at least one output line, to lock the second switching element in the OFF state, so that the first switching element is switched off, and/or
when the output power level of the motive power system is at its minimum, the method further comprises:
operating the at least one control button;
the main control unit judging whether to switch off the electric tool or increase the output power of the motive power system based on a second input signal from the at least one input line;
upon judging that the electric tool is to be switched off, the main control unit outputting a second output signal to the at least one output line, to lock the second switching element in the OFF state, so that the first switching element is switched off; otherwise, the main control unit increasing the output power of the motive power system.
